# FASCICULE DE BREVET EUROPEEN

(11) **EP 1 259 119 B1**
(45) Date de publication et mention de la délivrance du brevet: **11.04.2007**
(21) Numéro de dépôt: 01909908.4
(22) Date de dépôt: 27.02.2001
(51) Int. Cl.: A23G 9/34, A23L 1/29, A23L 1/305, A23G 9/04, A23G 9/38

(54) **DESSERT GLACE HYPERPROTEINE ET HYPOCALORIQUE, ET SON PROCEDE DE PREPARATION**
PROTEINREICHE UND KALORIEARME GEFRORENE SÜSSSPEISEN UND VERFAHREN ZU IHRER HERSTELLUNG
FROZEN DESSERT WITH VERY HIGH PROTEIN AND VERY LOW CALORIE CONTENT, AND METHOD FOR PREPARING SAME

(30) Priorité: 29.02.2000 FR 0002665
(43) Date de publication de la demande: 27.11.2002
(73) Titulaire: CEPRODI-Compagnie Européenne de Produits Diététiques, 75008 Paris (FR)
(72) Inventeur: Allouche, Reginald, 75006 Paris (FR)
(74) Mandataire: Boulinguiez, Didier
(86) Numéro de dépôt international: PCT/FR2001/000564
(87) Numéro de publication internationale: WO 2001/064045

(56) Documents cités:
- EP-A- 0 600 670
- WO-A-00/07457
- WO-A-93/02567
- WO-A-98/44807
- WO-A-99/51106
- FR-A- 2 781 125
- FR-A- 2 788 409
- NL-A- 8 702 797
- US-A- 4 435 439
- US-A- 4 626 441
- US-A- 4 643 906
- US-A- 4 874 627
- US-A- 5 215 777
- PATENT ABSTRACTS OF JAPAN vol. 1999, no. 06, 31 mars 1999 (1999-03-31) & JP 01 218553 A (GENERAL FOODS CORP), 31 août 1989 (1989-08-31)
- PATENT ABSTRACTS OF JAPAN vol. 018, no. 490 (C-1249), 13 septembre 1994 (1994-09-13) & JP 06 165656 A (GREEN CROSS CORP:THE;OTHERS: 02), 14 juin 1994 (1994-06-14)
- PATENT ABSTRACTS OF JAPAN vol. 012, no. 103 (C-485), 5 avril 1988 (1988-04-05) & JP 62 232361 A (GREEN CROSS CORP:THE;OTHERS: 02), 12 octobre 1987 (1987-10-12)
- DATABASE WPI Section Ch, Week 199329 Derwent Publications Ltd., London, GB; Class D13, AN 1993-234173 XP001252818 & SU 1 750 601 A (KAZA PHYS TRAINING INST) , 30 juillet 1992 (1992-07-30)
- PATENT ABSTRACTS OF JAPAN vol. 014, no. 582 (C-0792), 26 décembre 1990 (1990-12-26) & JP 02 255046 A (SNOW BRAND MILK PROD CO LTD), 15 octobre 1990 (1990-10-15)

## Description

L'invention a pour objet un dessert glacé hyperprotéiné et hypocalorique. Elle vise également le procédé de préparation de ce dessert glacé.

Au sens de la présente invention, on entend par le terme de dessert glacé toute préparation alimentaire surgelée destinée à être consommée telle quelle à la sortie d'un congélateur ou d'un réfrigérateur, ladite préparation alimentaire pouvant se présenter sous la forme notamment de crème glacée, de glace ou de sorbet.

Les desserts glacés traditionnels sont par excellence des produits réputés anti-régime car ils contiennent soit une teneur élevée en matières grasses, soit une teneur en glucides simples comme les sucres (cas des sorbets), soit les deux. C'est bien entendu le cas des crèmes glacées au chocolat par exemple, qui sont constituées d'un mélange de cacao, de sucre et de crème. Même les desserts glacés que l'on trouve sur le marché comme présentant une teneur allégée en sucres présentent une forte valeur calorique du fait que, le plus généralement, l'allègement de la teneur en sucres est compensée par une augmentation de la teneur en matières grasses. Il en va de même des desserts présentés comme ayant une teneur allégée en matières grasses, puisque le plus souvent, la diminution de la teneur en matières grasses a été obtenue grâce à une augmentation de la teneur en sucres. Des desserts hypocaloriques sont aussi connus dans l'art, p. ex US 4 626 441 et JP 01 218 553.

Il est indéniable que de plus en plus, les consommateurs sont attentifs à leur apparence physique, notamment en raison de l'apparence filiforme des mannequins montrés dans les magazines ou sur les affiches ou dans les publicités télévisées. La plupart des personnes souhaiteraient par conséquent mincir, mais sans toutefois sacrifier leur plaisir de consommation alimentaire. L'idéal serait donc de pouvoir continuer à manger en se faisant plaisir, c'est-à-dire en mangeant à volonté des produits de haute qualité gustative, sans pour autant prendre de poids. Les consommateurs sont en fait de plus en plus conduits à se tourner vers de multiples régimes dits "régimes minceur", qui se caractérisent le plus généralement par un moindre apport calorique quotidien, obtenu par une moindre quantité d'aliments ingérés, associé le plus souvent à une réduction de la teneur en lipides.

Ces régimes sont malheureusement difficiles à observer sur une longue période et entraînent une perte de poids liée à une perte de masse musculaire, c'est-à-dire une perte de masse maigre. On observe alors un manque de tonicité et d'élasticité de la peau, en même temps qu'une asthénie physique et intellectuelle. En outre, les personnes suivant à la lettre ces régimes minceur ne mangent pas autant qu'elles le souhaiteraient et souffrent donc de la faim et éprouvent des frustrations.

Il existe donc un réel besoin de disposer de produits de régime qui, tout en étant hypocaloriques, n'entraînent pas les conséquences néfastes indiquées ci-dessus, et qui permettent au consommateur de suivre un régime avec plaisir, c'est-à-dire qui lui permettent de manger à satiété et de perdre sa masse grasse, sans que ce soit au détriment de sa masse maigre.

Ceci est d'autant plus vrai en ce qui concerne les desserts glacés traditionnels et de consommation courante.

Il est donc reconnu qu'il serait nécessaire de procurer à l'organisme, lors de ces périodes de réduction d'apports caloriques, un apport plus important en protéines de hautes valeurs nutritionnelle et biologique.

Mais cette contrainte supplémentaire complique très notablement l'exercice de formulation de desserts glacés qui soient à la fois hypocaloriques, industrialisables, stables au niveau de la conservation, et qui présentent une texture et un goût satisfaisants. En ce qui concerne la texture, il est important que les desserts glacés présentent, à la sortie du congélateur ou du réfrigérateur, une aptitude à être facilement coupés ou servis à la cuillère, et qu'ils présentent lors de la dégustation un moelleux et une onctuosité convenables.

Or, il est du mérite du demandeur d'avoir réussi à mettre au point, après de nombreux essais, un dessert glacé dont les caractéristiques physiques, texturales et organoleptiques se rapprochent sensiblement de celles des crèmes glacées traditionnelles, et qui soit en même temps hypocalorique et hyperprotéiné. Ce dessert glacé se présente sous forme surgelée et peut être présenté en pot, en coupelle, formé en bâtonnets, enrobé d'un agent enrobant, avec ou sans marquants, morceaux ou coulis, sauce ou nappage.

Le dessert glacé hyperprotéiné et hypocalorique conforme à l'invention est défini à la revendication 1. Entre autres il est caractérisé par le fait qu'il présente les pourcentages étant exprimés poids pour poids par rapport au produit commercial, une teneur en protéines (calculée en Nx6.25) comprise entre environ 8 et environ 15 %, une teneur en glucides comprise entre environ 6 et environ 14 %, et une teneur en lipides comprise entre environ 1 et environ 5 %.

De préférence, le dessert glacé conforme à l'invention présente une teneur en protéines comprise entre 8 et 14 %, une teneur en glucides comprise entre 7 et 14 % et une teneur en lipides comprise entre 2 et 5 %.

Plus préférentiellement encore, le dessert glacé selon l'invention présente une teneur en protéines comprise entre 8.5 et 13 %, une teneur en glucides comprise entre 7.5 et 13 % et une teneur en lipides comprise entre 2.25 et 5 %. La valeur calorique totale du dessert glace se situe entre 3,56 kJ et 5,44 kJ (85 et 130 Kcal/100 grammes), de préférence entre 3,77 kJ et 5,44 kJ (90 et 130 Kcal/100 grammes), et plus préférentiellement encore entre 3,98 kJ et 5,44 kJ (95 et 130 Kcal/100) grammes.

Le dessert glacé selon l'invention est également caractérisé par, le fait que son indice chimique est supérieur à 100.

On rappelle qu'on entend par indice chimique d'une protéine le produit par 100 du plus petit des quotients obtenus en divisant, pour chacun des acides aminés essentiels ou groupes d'acides aminés essentiels, la quantité présente dans 100 g de cette protéine par la quantité correspondante présente dans 100 g de la protéine servant de référence, celle-ci étant caractérisée par les teneurs suivantes rapportées à 100 g :
- L isoleucine 4 g
- L leucine 7 g
- L lysine 5,5 g
- DL méthionine + L cystine 3,5 g
- L phénylalanine + L tyrosine 6 g
- L thréonine 4 g
- L tryptophane 1 g
- L valine 5 g

Au cas où la formule se révèle déficitaire en acides aminés, on les ajoute en quantité suffisante pour que l'indice chimique soit supérieur à 100.

Les protéines utilisées pour la constitution du dessert glacé conforme à l'invention peuvent être d'origine animale et/ou végétale. On préfère utiliser des protéines laitières telles que caséine, protéines laitières totales, lactalbumine, lactosérum, concentrés protéiques laitiers contenant peu ou pas de lactose, protéines laitières ultrafiltrées, protéines sériques ultrafiltrées, babeurre et babeurre ultrafiltré, ou protéines sériques délactosées thermocoagulées. Selon une réalisation préférentielle de l'invention, les protéines laitières sont présentes en une teneur comprise entre 7 et 13 %, de préférence entre 8 et 12.5 % et plus préférentiellement encore entre 8.5 et 12 %.

On peut également, à côté des protéines laitières, utiliser notamment des protéines d'oeuf, de soja, de pois, de lupin, de blé...

Comme glucides, on peut utiliser des maltodextrines, des maltodextrines hydrogénées, les sucres, les polyols, et des polymères de glucose ou de fructose difficilement digestibles comme le polydextrose. Le dessert glacé conforme à l'invention présente une teneur en polyols comprise entre 2 et 6 %, de préférence entre 3 et 5 %, et une teneur en polymères de glucose ou de fructose difficilement digestibles comprise entre 2 et 6 %, de préférence entre 3 et 5 %. Comme lipides, on utilise des poudres de matières grasses de coprah, de palme, de soja, de tournesol ; ou encore des huiles de coprah, de palme, raffinées et hydrogénées. Une source de lipides peut également être constituée par l'émulsifiant (comme par exemple les mono et/ou polyglycérides d'acides gras).

Comme polyols, on peut utiliser le lactitol, le sorbitol, le xylitol, le maltitol, le mannitol et les sirops de glucose hydrogénés, le lactitol étant préféré.

Le dessert glacé conforme à l'invention présente également une teneur de 0.1 à 2 %, de préférence de 0.1 à 1.5 %, et plus préférentiellement encore de 0.1 à 1% d'agents texturants constitués d'émulsifiants et de stabilisants hydrocolloïdaux, les émulsifiants étant de préférence des mono ou di-glycérides d'acides gras et les stabilisants hydrocolloïdaux de la farine de graine de guar ou des carraghénanes.

Le plus généralement, le dessert glacé selon l'invention comprend de 8 à 15 % de protéines d'origine animale ou végétale, de 2 à 7 % de poudre de lait à 0 % de matière grasse, de 0.01 à 9 % d'agents sucrants et de substances organiques, notamment des acides aminés. 100 grammes de produit fini apportent au moins 9 grammes de protéines et de plus le rapport entre la valeur calorique des protéines et la valeur calorique totale du produit fini est supérieur à 0.35. Par ailleurs, la proportion d'eau dans le produit fini est le plus souvent comprise entre 70 et 82 %, de préférence entre 70 et 80 %.

Le dessert glacé selon l'invention comporte, selon une caractéristique préférentielle, entre 2 et 5 %, de préférence entre 2.5 et 4.5 %, et plus préférentiellement encore entre 2.5 et 4.25 % de poudre de lait à 0 % de matière grasse, et entre 1 et 6 %, de préférence entre 1 et 5.5 %, et plus préférentiellement encore entre 1 et 5 % d'huiles raffinées hydrogénées. Bien entendu, le dessert glacé conforme à l'invention peut également contenir d'autres ingrédients conventionnels tels que la poudre de lait classique, des hydrocolloïdes, des acides aminés, des épices, des exhausteurs de goût, des édulcorants intenses, des colorants, des vitamines, des minéraux, des fibres insolubles ou solubles, et peut renfermer, entre autres, des morceaux de fruits, de pralines, de chocolat et autres marquants ou agents aromatiques en poudre et/ou en morceaux et/ou sous forme liquide.

Le plus souvent, les ingrédients se présentent sous la forme de poudre. La reconstitution du mix à partir de ces poudres se fait en grande partie grâce à de l'eau ou à du lait écrémé.

L'invention a également pour objet le procédé de préparation du dessert glacé selon l'invention, ce procédé comprenant les étapes suivantes :
- sélection des ingrédients, pesée et dosage, lesdits ingrédients étant pour la plupart sous forme de poudres,
- mélange intime, sous agitation, de ces ingrédients, avec ou sans prémélange,
- hydratation du mélange,
- chauffage à une température supérieure à 50°C pour bien dissoudre les sucres et fondre les matières grasses,
- pasteurisation puis homogénéisation sous pression,
- maturation en présence éventuellement d'arômes et d'édulcorants artificiels du type aspartame ou acésulfame K,
- foisonnage puis surgélation et congélation.

L'invention pourra être mieux comprise à l'aide des exemples de réalisation qui suivent, donnés à titre purement illustratif.

### EXEMPLE : Formulation de desserts glacés selon l'invention

Des desserts glacés conformes à l'invention, répondant aux formulations données dans le Tableau ci-dessous, sont préparés et testés par un panel de dégustation.

| | **Formule 1*** | **Formule 2** | **Formule 3** | **Formule 4** |
|---|---|---|---|---|
| Arôme caramel (Société QUEST) | 0.05 | 0.05 | 0.05 | - |
| Arôme vanille | 0.2 | 0.2 | 0.2 | 0.437 |
| Extrait naturel vanille | 1.6 | - | - | - |
| Colorant β-carotène 1.7 % (Dr MARCUS) | 0.1 | 0.1 | 0.1 | 0.088 |
| Gousse de vanille | 0.04 | 0.04 | 0.04 | 0.04 |
| Protéine ALAPLEX 1380 (Protéine totale de lait ; Fournisseur NZMP) | 9 | 10 | 11.5 | 10 |
| Poudre de lait à 0 % de matière grasse | 6 | 3.5 | 0 | 3.5 |
| Lactitol | - | 4 | 5 | 4 |
| LITESSE | - | 4 | 5 | 4 |
| RAFTILOSE L60 (sirop d'oligofructose) | 6 | - | - | - |
| Aspartame | 0.015 | 0.015 5 | 0.015 | 0.035 |
| Acésulfame K | 0.03 | 0.03 | 0.03 | 0.03 |
| Eau | 74.06 | 75.065 | 75.065 | 74.901 |
| Coco hydrogéné | 2.7 | 2.7 | 2.7 | 2.7 |
| L-méthionine | - | 0.1 | 0.1 | 0.1 |
| Lygomme FM 4609 (ensemble de mono- et di-glycérides d'acides gras et farine de graine de caroube, de guar, et carraghénanes ; Fournisseur S.K.W.) | 0.2 | 0.2 | 0.2 | 0.2 |
| Test organoleptique | Goût un peu trop protéiné | Satisfaisant. Moins de sensation sableuse en bouche | Goût légèrement protéiné | Tout à fait satisfaisant |
| Texture | Relativement dure mais crémeuse en bouche | Texture moins dure | Moins crémeuse que la formule 2, irrégulière, légèrement farineuse | Dureté correcte, petits cristaux. Texture homogène |

| | | | | |
|---|---|---|---|---|
| * non couverte par les revendications | | | | |

Les problèmes rencontrés lors de la formulation des desserts glacés étaient principalement un problème de trop grande dureté, due à l'absence de sucre qui permet généralement une meilleure cristallisation ou une cristallisation plus fine, ainsi qu'un goût déplaisant et une texture sableuse occasionnés par l'élévation de la teneur en protéines. Par ailleurs, le déficit en matières grasses par rapport aux desserts glacés traditionnels (matières grasses apportées le plus souvent par de la crème laitière), entraîne bien évidemment un manque d'onctuosité.

Ces problèmes ont été résolus de façon satisfaisante dans les desserts glacés répondant aux formulations 2 à 4, la formulation 4 étant jugée la meilleure par le panel de dégustation. Les protéines de lait de marque ALAPLEX sont préférées à la caséine ou aux caséinates qui contribuent à la dureté du dessert glacé et qui apportent une texture trop sableuse. Par ailleurs, il a été noté que le remplacement du saccharose ou du fructose par du raftilose permet d'apporter un peu d'onctuosité et une meilleure saveur sucrée mais peut entraîner des risques de cristallisation. L'utilisation de lactitol et de polydextrose apporte une solution tout à fait satisfaisante.

L'augmentation du taux de lactitol et de polydextrose (LITESSE) de la formule 2 à la formule 3 permet ainsi d'améliorer la finesse de la cristallisation.

La formule 4 permet d'obtenir les meilleurs résultats. On dispose ainsi d'un dessert glacé hyperprotéiné et hypocalorique qui présente des caractéristiques texturales et organoleptiques très proches des desserts glacés traditionnels contenant du saccharose et une haute teneur en matières grasses.

## Revendications

1. Dessert glacé hyperprotéiné et hypocalorique, présentant une teneur en protéines comprise entre 8 et 15 %, une teneur en lipides comprise entre 1 et 5 %, une teneur en glucides comprise entre 6 et 14 %, dont une teneur en polyols comprise entre 2 et 6 % et une teneur en polymères de glucose ou de fructose comprise entre 2 et 6 %, ces pourcentages étant exprimés en poids pour poids par rapport au produit commercial.

2. Dessert glacé selon la revendication 1, **caractérisé par le fait que** les polyols sont choisis parmi le lactitol, le sorbitol, le xylitol, le maltitol, le mannitol et les sirops de glucose hydrogéné, le lactitol étant préféré.

3. Dessert glacé selon l'une ou l'autre des revendications 1 et 2, présentant une teneur en protéines comprise entre 8 et 14 %, une teneur en glucides comprise entre 7 et 14 % et une teneur en lipides comprise entre 2 et 5 %.

4. Dessert glacé selon la revendication 3, présentant une teneur en protéines comprise entre 8.5 et 13 %, une teneur en glucides comprise entre 7.5 et 13 % et une teneur en lipides comprise entre 2.25 et 5 %.

5. Dessert glacé selon l'une quelconque des revendications 1 à 4, **caractérisé par le fait qu'**il présente un indice chimique supérieur à 100.

6. Dessert glacé selon l'une quelconque des revendications 1 à 5, **caractérisé par le fait que** sa valeur calorique est comprise entre 3,56 et 5,44 kJ (85 et 130), de préférence entre (90 et 130), 3,77 et 5,44 kJ et plus préférentiellement encore entre 3,98 et 5,44 kJ (95 et 130 Kcal/100 grammes).

7. Dessert glacé selon l'une quelconque des revendications 1 à 6, **caractérisé par le fait qu'**il présente une teneur en protéines de lait de 7 à 13 %, de préférence de 8 à 12.5 % et plus préférentiellement encore de 8.5 à 12 %.

8. Dessert glacé selon l'une quelconque des revendications 1 à 7, **caractérisé par le fait qu'**il présente une teneur en polyols comprise entre 3 et 5 %.

9. Dessert glacé selon l'une quelconque des revendications 1 à 8, **caractérisé par le fait qu'**il présente une teneur en polymères de glucose ou de fructose entre 3 et 5 %.

10. Dessert glacé selon l'une quelconque des revendications 1 à 9, **caractérisé par le fait qu'**il présente une teneur de 0.1 à 2 %, de préférence à 0.1 à 1.5 %, et plus préférentiellement encore de 0.1 à 1 % d'agents texturants constitués d'émulsifiants et de stabilisants hydi-ocolloldaux, les émulsifiants étant de préférence des mono et diglycérides d'acides gras et les stabilisants hydrocolloïdaux de la farine de graine de guar et des carraghénanes.

11. Dessert glacé selon l'une quelconque des revendications 1 à 10, **caractérisé en ce que** la proportion d'eau dans le produit fini est comprise entre 70 et 82 %, de préférence entre 70 et 80 %.

12. Dessert glacé selon l'une quelconque des revendications 1 à 11, **caractérisé en ce que** 100 grammes du produit fini apportent au moins 9 grammes de protéines et **en ce que** le rapport entre la valeur calorique des protéines et la valeur calorique totale du produit fini est supérieur à 0.35.

13. Procédé de préparation d'un dessert glacé selon l'une quelconque des revendications 1 à 12, comprenant les étapes suivantes :
- sélection des ingrédients, pesée et dosage, lesdits ingrédients étant pour la plupart sous forme de poudres,
- mélange intime, sous agitation, de ces ingrédients, avec ou sans prémélange,
- hydratation du mélange,
- chauffage à une température supérieure à 50°C pour bien dissoudre les sucres et fondre les matières grasses,
- pasteurisation puis homogénéisation sous pression,
- maturation en présence éventuellement d'arômes et d'édulcorants artificiels du type aspartame ou acésulfame K,
- foisonnage puis surgélation et congélation.

## Claims

1. A high protein and low calorie frozen dessert, having a protein content of between 8 and 15%, a lipid content of between 1 and 5%, a carbohydrate content of between 6 to 14%, including a polyol content of between 2 and 6% and a content of glucose or fructose polymers of between 2 and 6%, these percentages being expressed by weight with reference to the commercial product.

2. The frozen dessert as claimed in claim 1, wherein the polyols are chosen among lactitol, sorbitol, xylitol, maltitol, mannitol and hydrogenated glucose syrups, lactitol being preferred.

3. The frozen dessert as claimed in any one of claim 1 to 2, having a protein content of between 8 and 14%, a carbohydrate content of between 7 and 14% and a lipid content of between 2 and 5%.

4. The frozen dessert as claimed in claim 3, having a protein content of between 8.5 and 13%, a carbohydrate content of between 7.5 and 13% and a lipid content of between 2.25 and 5%.

5. The frozen dessert as claimed in any one of claim 1 to 4, having a chemical index of greater than 100.

6. The frozen dessert as claimed in any one of claim 1 to 5, having a caloric value of between 3.56 kJ and 5.44 kJ (85 and 130 Kcal/100 gram), preferably of between 3.77 kJ and 5.44 kJ (90 and 130 Kcal/100 gram), and more preferably of between 3.98 kJ and 5.44 kJ (95 and 130 Kcal/100 gram).

7. The frozen dessert as claimed in any one of claim 1 to 6, having a milk protein content of between 7 and 13%, preferably of between 8 and 12.5% and more preferably of between 8.5 and 12%.

8. The frozen dessert as claimed in any one of claim 1 to 7, having a polyol content of between 3 and 5%.

9. The frozen dessert as claimed in any one of claim 1 to 8, having a content of glucose or fructose polymers of between 3 and 5%.

10. The frozen dessert as claimed in any one of claim 1 to 9, having a content of 0.1 to 2%, preferably 0.1 to 1.5%, and more preferably 0.1 to 1% of texturizing agents consisting of emulsifiers selected from the group consisting of mono- or diglycerides of fatty acids and hydrocolloidal stabilizers selected from the group consisting of guar seed flour and carrageenans.

11. The frozen dessert as claimed in any one of claim 1 to 10, having a proportion of water in the finished product of between 70 and 82%, preferably of between 70 and 80%.

12. The frozen dessert as claimed in any one of claim 1 to 11, wherein 100 g of the finished product provide at least 9 g of proteins and having a ratio between the caloric value of protein and the total caloric value of the finished product greater than 0.35.

13. Method for preparing a frozen dessert as claimed in any one of claim 1 to 12, comprising the following steps:
- selecting the ingredients, weighing and measuring out, said ingredients being for the majority in powder form,
- intimate mixing, under agitation, of these ingredients, with or without pre-mixing,
- hydrating the mix,
- heating at a temperature greater than 50°C to well dissolve the sugars and melt the fat,
- pasteurization and then homogenization under pressure,
- maturation optionally in presence of aroma and artificial sweeteners such as aspartame or acesulfame K,
- overrun-producing then quick-freezing and deep-freezing.

## Patentansprüche

1. Proteinreiche und kalorienarme, gefrorene Süßspeise, welche einen Proteingehalt von 8 bis 15 %, einen Fettgehalt von 1 bis 5 % und einen Kohlehydratgehalt von 6 bis 14 %, wovon der Gehalt an Polyolen von 2 bis 6 % und der Gehalt an Glukose- oder Fruktose-Polymeren von 2 bis 6 % beträgt, aufweist, wobei die prozentualen Gehalte als Gewicht, bezogen auf das Gewicht des kommerziellen Produkts, angegeben sind.

2. Gefrorene Süßspeise gemäß Anspruch 1, **dadurch gekennzeichnet, dass** die Polyole ausgewählt sind aus Lactitol, Sorbitol, Xylitol, Maltitol, Mannitol und hydrierten Glukose-Sirupen, wobei Lactitol bevorzugt ist.

3. Gefrorene Süßspeise gemäß wenigstens einem der Ansprüche 1 und 2, welche einen Proteingehalt von 8 bis 14 %, einen Kohlehydratgehalt von 7 bis 14 % und einen Fettgehalt von 2 bis 5 % aufweist.

4. Gefrorene Süßspeise gemäß Anspruch 3, welche einen Proteingehalt von 8,5 bis 13 %, einen Kohlehydratgehalt von 7,5 bis 13 % und einen Fettgehalt von 2,25 bis 5 % aufweist.

5. Gefrorene Süßspeise gemäß wenigstens einem der Ansprüche 1 bis 4, **dadurch gekennzeichnet, dass** sie einen chemischen Index von über 100 aufweist.

6. Gefrorene Süßspeise gemäß wenigstens einem der Ansprüche 1 bis 5, **dadurch gekennzeichnet, dass** sie einen Kalorienwert von 3,56 kJ bis 5,44 kJ (85 bis 130), bevorzugt von 3,77 kJ bis 5,44 kJ (90 bis 130), am bevorzugtesten von 3,98 kJ bis 5,44 kJ (95 bis 130 Kcal/100 g), aufweist.

7. Gefrorene Süßspeise gemäß wenigstens einem der Ansprüche 1 bis 6, **dadurch gekennzeichnet, dass** sie einen Gehalt an Milchproteinen von 7 bis 13 %, bevorzugt von 8 bis 12,5 %, am bevorzugtesten von 8,5 bis 12 %, aufweist.

8. Gefrorene Süßspeise gemäß wenigstens einem der Ansprüche 1 bis 7, **dadurch gekennzeichnet, dass** sie einen Gehalt an Polyolen von 3 bis 5 % aufweist.

9. Gefrorene Süßspeise gemäß wenigstens einem der Ansprüche 1 bis 8, **dadurch gekennzeichnet, dass** sie einen Gehalt an Glukose- oder Fruktose-Polymeren von 3 bis 5 % aufweist.

10. Gefrorene Süßspeise gemäß wenigstens einem der Ansprüche 1 bis 9, **dadurch gekennzeichnet, dass** sie einen Gehalt an Texturmitteln, gebildet aus Emulgatoren und Hydrokolloid-Stabilisatoren, von 0,1 bis 2 %, bevorzugt von 0,1 bis 1,5 %, am bevorzugtesten von 0,1 bis 1 %, aufweist, wobei die Emulgatoren bevorzugt Mono- und Diglyceride von Fettsäuren und die Hydrokolloid-Stabilisatoren Guarkernmehl und Carrageenane sind.

11. Gefrorene Süßspeise gemäß wenigstens einem der Ansprüche 1 bis 10, **dadurch gekennzeichnet, dass** der Wasseranteil in dem Endprodukt 70 bis 82 %, bevorzugt 70 bis 80 %, beträgt.

12. Gefrorene Süßspeise gemäß wenigstens einem der Ansprüche 1 bis 11, **dadurch gekennzeichnet, dass** 100 Gramm des Endprodukts wenigstens 9 Gramm Proteine aufweisen, und dass das Verhältnis zwischen dem Kalorienwert der Proteine und dem Gesamt-Kalorienwert des Endprodukts über 0,35 liegt.

13. Verfahren zur Herstellung einer gefrorenen Süßspeise gemäß wenigstens einem der Ansprüche 1 bis 12, welches folgende Schritte umfasst:
- Auswählen der Zutaten, Abwiegen und Dosieren, wobei die Zutaten in der Mehrzahl in Pulverform vorliegen,
- Intensives Mischen - unter Rühren - dieser Zutaten, mit oder ohne Vormischen,
- Hydratation der Mischung,
- Erhitzen auf eine Temperatur über 50 °C, um die Zucker gut zu lösen und die Fettstoffe zu schmelzen,
- Pasteurisieren und anschließendes Homogenisieren unter Druck,
- Reifung, gegebenenfalls in Gegenwart von Aromen und künstlichen Süßstoffen vom Aspartam- oder Acesulfam-K-Typ,
- Aufquellen und anschließendes Tiefkühlen und Tiefgefrieren.
